# EUROPEAN PATENT SPECIFICATION

(11) **EP 3 464 434 B1**
(45) Date of publication and mention of the grant of the patent: **09.12.2020**
(21) Application number: 17729262.0
(22) Date of filing: 23.05.2017
(51) Int. Cl.: C08J 9/00, C08G 18/28, C08G 18/32

(54) **FLAME RETARDANT SEMI-RIGID POLYURETHANE FOAM**
FLAMMHEMMENDER HALBHARTER POLYURETHANSCHAUM
MOUSSE DE POLYURÉTHANE SEMI-RIGIDE IGNIFUGEANTE

(30) Priority: 30.05.2016 IT UB20163911
(43) Date of publication of application: 10.04.2019
(73) Proprietor: Dow Global Technologies LLC, Midland, MI 48674 (US)
(72) Inventor: GUIDETTI, Giuliano, 42015 Correggio (IT); FREGNI, Sabrina, 42015 Correggio (IT)
(74) Representative: Boult Wade Tennant LLP
(86) International application number: PCT/US2017/034016
(87) International publication number: WO 2017/210022

(56) References cited:
- WO-A1-00/35999
- WO-A1-2011/127028
- US-A1- 2011 184 079
- US-A1- 2011 319 572

## Description

### FIELD OF THE INVENTION

The present invention relates to a composition for a flame retardant semi-rigid polyurethane foam which is useful in vehicle applications which require sound deadening and vibration management, especially for thin wall applications.

### BACKGROUND OF THE INVENTION

Noise and vibration management is a significant issue for vehicle manufacturers, as cabin noise is a major factor in the comfort experience of automotive passengers. Therefore, noise and vibration abatement measures are routinely incorporated into motor vehicles. These abatement measures often utilize flexible polyurethane foams. However, such foams typically are called upon to perform one or more functional purpose that cannot be compromised at the expense of noise and vibration absorption, for example, under the hood applications require a high degree of flame resistance to meet original equipment manufacture's (OEM) specifications.

The use of fire retardants in polyurethane foams is well known. Methods of imparting flame retardancy that combine calcium carbonate, ammonium hydroxide, or another such inorganic compound, halophosphoric acid compound, melamine, or another such compound with a polyol are also known. However, a large amount of such a compound must be added to impart flame retardancy often resulting in considerable problems in relationship to the properties, moldability, economics, and the like.

Methods of making flame retardant flexible polyurethane foam can also include adding a halogenated phosphoric acid ester as a flame retardant to a composition for polyester-based polyurethane foam and using a reactive flame retardant that adds a phosphorus or halogen atom to the polyhydroxyl compound or organic polyisocyanate that is a raw material of the polyurethane foam. However, the urethane foam obtained by these methods discolors over time, the foam itself deteriorates, and adequate flame retardancy is not maintained over an extended period of time because the flame retardant volatilizes.

Due to recent environmental and market trends, non-halogenated flame retardant solutions have been pursued. For example, USP 6,765,034 discloses a flame resistant flexible polyurethane composition for use in sound deadening and vibration applications that comprises no flame retardants and relies on the selection of a specific isocyanate mixture and polyol.

US Patent Publication 20030130365 describes a process to make a flexible polyurethane foam from a rigid polyurethane foam comprising an organic phosphate flame retardant in combination with expandable graphite. However, said process is a multi-step process requiring a crushing step and a heating step.

USP 6,552,098 discloses a semi-rigid polyurethane foam comprising exfoliating graphite and optionally one or more additional flame retardant additives. However, said process does not disclose a semi-rigid polyurethane foam having improved flame retardant properties in thin wall applications.

WO 2011/127028 A1 discloses a liquid flame retardant composition and its use to produce polyurethane foams that comprises a liquid flame retardant, an aromatic polyester polyol, a low molecular weight diol and a cyclic phosphonate flame retardant. The liquid flame retardant may be 2,2-bis(chloromethyl)-trimethylene bis(bis(2-chloroethyl)phosphate.

There exists an unmet need for a flame resistant semi-rigid polyurethane foam composition for sound deadening and vibration applications which meets OEM requirements, especially in thin wall applications and a method to make said foam, that is cost effective, does not require additional multiple process steps over conventional methods, and does not require complex flame retardant mixtures and/or high levels of flame retardants.

### BRIEF SUMMARY OF THE INVENTION

According to the invention, there is provided a method for producing a flame - retardant open-celled semi-rigid polyurethane foam having an overall density of 5 to 30 kg/m³ by reacting (a) a polyisocyanate, preferably polymethylene polyphenylene polyisocyanates or an isomer thereof and (b) a polyol, preferably a polyether polyol or a polyester polyol, having an average molecular weight of 100 to 10,000 and average functionality of 2 to 6, in the presence of 2,2-bis(chloromethyl)-trimethylene bis(bis(2-chloroethyl)phosphate, in an amount of 7 to 25 percent by weight of the foam, (d) a blowing agent, and (e) one or more optional additional component, preferably exfoliating graphite in an amount of equal to or greater than 2 percent by weight of the foam and equal to or less than 20 percent by weight of the foam, with the proviso that there are no other phosphorous-containing flame retardant additives, other than (c), in the resulting flame-retardant open-celled semi-rigid polyurethane foam.

In another embodiment, the method of the present invention uses water as the substantially sole blowing agent in preparing such foams, preferably added in an amount of 5 to 25 parts by weight per 100 parts by weight of polyol.

In another embodiment, the method of the present invention uses a combination of water and halocarbon as the blowing agent,

Further according to the invention, there is a semi-rigid low-density open-celled foam produced by the method described herein above.

It has been surprisingly found that the use of 2,2-bis(chloromethyl)-trimethylene bis(bis(2-chloroethyl)phosphate as the sole phosphorous-containing flame retardant agent in the production of a semi-flexible foam allows the production of a low-density foam which has enhanced flame retardation properties, especially for thinner foam dimensions.

### DETAILED SUMMARY OF THE INVENTION

The term semi-rigid as applied to foams is a standard term used in the art. Generally such foams have a glass transition temperature (Tg) between rigid and flexible foams. A low-density foam means the foam has a density of 5 to 30 kg/m³, preferably 10 to 20 kg/m³ and more preferably a density of 10 to 15 kg/m³. Open-celled foam means that 50 percent or more of the cells in the foam have an open structure. Preferably, for use in acoustic applications, the foams have greater than 90 percent open cells.

Polyisocyanates useful in making polyurethanes include aliphatic and cycloaliphatic and preferably aromatic polyisocyanates or combinations thereof, advantageously having an average of from 2 to 3.5, and preferably from 2 to 3.2 isocyanate groups per molecule. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. The preferred polyisocyanates are aromatic polyisocyanates such as disclosed in USP 3,215,652, incorporated in its entirety herein by reference.

Especially preferred polyisocyanates for use in the present inventions are polymethylene polyphenylene polyisocyanates (MDI). As used herein MDI refers to polyisocyanates selected from diphenylmethane diisocyanate isomers, polyphenyl polymethylene polyisocyanates and derivatives thereof bearing at least two isocyanate groups. In addition to the isocyanate groups, such compounds may also contain carbodiimide groups, uretonimine groups, isocyanurate groups, urethane groups, allophanate groups, urea groups or biuret groups. MDI is obtainable by condensing aniline with formaldehyde, followed by phosgenation, which process yields what is called crude MDI. By fractionation of crude MDI, polymeric and pure MDI can be obtained. The crude, polymeric or pure MDI can be reacted with polyols or polyamines to yield modified MDI. The MDI advantageously has an average of from 2 to 3.5, and preferably from 2 to 3.2 isocyanate groups per molecule. Especially preferred are methylene-bridged polyphenyl polyisocyanates and mixtures thereof with crude diphenylmethane diisocyanate, due to their ability to cross-link the polyurethane.

The total amount of polyisocyanate used to prepare the polyurethane foam should be sufficient to provide an isocyanate reaction index of typically from 25 to 300. Preferably the index is from 95 to 110. An isocyanate reaction index of 100 corresponds to one isocyanate group per isocyanate reactive hydrogen atom present from the water and the polyol composition.

Polyols which are useful in the preparation of the polyisocyanate-based cellular polymers include those materials having two or more groups containing an active hydrogen atom capable of undergoing reaction with an isocyanate. Preferred among such compounds are materials having at least two hydroxyl, primary or secondary amine, carboxylic acid, or thiol groups per molecule. Compounds having at least two hydroxyl groups per molecule are especially preferred due to their desirable reactivity with polyisocyanates. Typically polyols suitable for preparing rigid polyurethanes include those having an average molecular weight of 100 to 10,000 and preferably 200 to 7,000. Such polyols also advantageously have a functionality of at least 2, preferably 3, and up to 8 active hydrogen atoms per molecule. For the production of semi-rigid foams, it is preferred to use a trifunctional polyol with a hydroxyl number of 30 to 500 mg KOH/g. Representative of polyols include polyether polyols, polyester polyols, polyhydroxy-terminated acetal resins, hydroxyl-terminated amines and polyamines. Examples of these and other suitable isocyanate-reactive materials are described more fully in USP 4,394,491. Preferred are polyols prepared by adding an alkylene oxide, such as ethylene oxide, propylene oxide, butylene oxide or a combination thereof, to an initiator having from 2 to 8, preferably 3 to 6 active hydrogen atoms.

In a preferred embodiment, the polyol is a mixture of polyether or polyester polyols used to prepare "flexible" foams and polyols used to prepare "rigid" foams. The flexible polyols generally have a hydroxyl number of 25 to 75 and a functionality of 2 to 3. The polyols used for rigid foams generally have a hydroxyl number of 150 to 800 and a functionality of 2 to 8. When such a blend is used, the blend has an average molecular weight and average functionality as described above.

In a preferred embodiment, the polyether alcohol is 100% propylene oxide based and has a functionality from 4.5 to 6.5 and a hydroxyl number of from 460 to 500 mg KOH/g.

It is preferred that the blowing agent consists essentially of water as the substantially sole blowing agent. The water reacts with isocyanate in the reaction mixture to form carbon dioxide gas, thus blowing the foam formulation. The amount of water added is generally in the range of 5 to 25 parts by weight per 100 parts by weight of polyol. Preferably water is added in the range of 5 to 15 parts, and more preferably from 8 to 12 parts per 100 parts of polyol.

If necessary, a volatile liquid such as a halogenated hydrocarbon or a low-boiling hydrocarbon (boiling point of -10°C to +70°C at normal pressure), such as pentane and/or isomers thereof or isobutane and/or isomers thereof may be used as a supplemental blowing agent. Although not preferred, a halocarbon may be used as a supplemental blowing agent. Halocarbons include fully and partially halogenated aliphatic hydrocarbons such as fluorocarbons, chlorocarbons, and chlorofluorocarbons. Examples of fluorocarbons include methyl fluoride, perfluoromethane, ethyl fluoride, 1,1-difluoroethane, 1,1,1-trifluoroethane (HFC-143a), 1,1,1,2-tetrafluoroethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane.

Partially halogenated chlorocarbons and chlorofluorocarbons for use in this invention include methyl chloride, methylene chloride, ethyl chloride, 1,1,1-trichloroethane, 1,1-dichloro-1-fluoroethane (FCFC-141b), 1-chloro-1,1-difluoroethane (HCFC-142b), 1,1-dichloro-2,2,2-trifluoroethane (HCHC-123) and 1-chloro-1,2,2,2-tetrafluoroethane (HCFC-124).

Fully halogenated chlorofluorocarbons include trichloromonofluoromethane (CFC-11) dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane.

The semi-rigid polyurethane foam compositions of the present invention contain a phosphorous-containing flame retardant. We have found a specific chlorinated phosphorous-containing compound that provides improved flammability performance, especially in thinner foams versus other phosphorous-containing flame retardant compounds. Said compound phosphorous-containing compound useful in the present invention is 2,2-bis(chloromethyl)trimethylene bis(bis(2-chloroethyl)phosphate.

The amount of 2,2-bis(chloromethyl)trimethylene bis(bis(2-chloroethyl)phosphate used in the foams to give the desired flame resistant properties is equal to or less than 25 percent by weight of the foam, and equal to or greater than 7 percent by weight of the foam, more preferably equal to or greater than 10 percent by weight of the foam. The only phosphorous-containing flame retardant compound in the semi-rigid polyurethane foam composition of the present invention is 2,2-bis(chloromethyl)-trimethylene bis(bis(2-chloroethyl)phosphate. In other words, the semi-rigid polyurethane foam composition of the present invention cannot contain a phosphorous-containing flame retardant compound other than 2,2-bis(chloromethyl)-trimethylene bis(bis(2-chloroethyl)phosphate.

In one embodiment, the semi-rigid polyurethane foam composition of the present invention may comprise one or more flame retardant additive in addition to the 2,2-bis(chloromethyl)trimethylene as long as it is not a phosphorous-containing compound, for example additional flame retardant additives include, but are not limited to, exfoliating graphite, ammonium polyphosphate, halogen-containing compounds, antimony oxides, boron-containing compounds and hydrated aluminas. Generally, when present the additional flame retardant will be added in an amount from 5 to 20 weight percent of the final foam.

When present, the additional flame retardant additive is preferably exfoliating graphite. Exfoliating graphite is graphite containing one or more exfoliating agents such that considerable expansion occurs upon exposure to heat. Exfoliating graphite is prepared by procedures known in the art. Generally graphite is first modified with oxidants, such as nitrates, chromates, peroxides, or by electrolysis to open the crystal layer and then nitrates or sulfates are intercalated within the graphite.

If present, the amount of exfoliating graphite used in the foams to give the desired physical properties is generally less than 20 percent by weight of the foam. Preferably the amount of graphite is 15 percent or less by weight of the foam. Preferably the amount of graphite is 2 percent by weight or greater of graphite in the final foam. Preferably the amount of graphite is 4 percent or greater by weight of the foam.

In addition to the foregoing critical components, it is often desirable to employ certain other ingredients in preparing cellular polymers. Among these additional components are catalysts, surfactants, preservatives, colorants, antioxidants, reinforcing agents, stabilizers and fillers. In making polyurethane foam, it is generally highly preferred to employ a minor amount of a surfactant to stabilize the foaming reaction mixture until it cures. Such surfactants advantageously comprise a liquid or solid organosilicone surfactant. Other, less preferred surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 5 parts of the surfactant per 100 parts by weight polyol are sufficient for this purpose.

One or more catalysts for the reaction of the polyol (and water, if present) with the polyisocyanate are advantageously used. Any suitable urethane catalyst may be used, including tertiary amine compounds and organometallic compounds. Exemplary tertiary amine compounds include triethylenediamine, N-methylmorpholine, N,N-dimethylcyclohexylamine, pentamethyidiethylenetriamine, tetramethylethylenediamine, 1-methyl-4-dimethylaminoethylpiperazine, 3-methoxy-N-dimethylpropylamine, N-ethylmorpholine, diethylethanolamine, N-cocomorpholine, N,N-dimethyl-N',N'-dimethyl isopropylpropylenediamine, N,N-diethyl-3-diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-2-ethyl hexanoate, as well as other organometallic compounds such as are disclosed in USP 2,846,408, incorporated in its entirety herein by reference. A catalyst for the trimerization of polyisocyanates, resulting in a polyisocyanurate, such as an alkali metal alkoxide may also optionally be employed herein. Such catalysts are used in an amount which measurably increases the rate of polyurethane or polyisocyanurate formation. Typical amounts are 0.001 to 2 parts of catalyst per 100 parts by weight of polyol.

In making a polyurethane foam, the polyol(s), polyisocyanate and other components, including the phosphorous-containing compound and optionally the exfoliating graphite are contacted, thoroughly mixed and permitted to expand and cure into a cellular polymer. It is often convenient, but not necessary, to preblend certain of the raw materials prior to reacting the polyisocyanate and active hydrogen-containing components. For example, it is often useful to blend the polyol(s), blowing agent, surfactants, catalysts and other components except for polyisocyanates, and then contact this mixture with the polyisocyanate. In a preferred embodiment, the phosphorous-containing compound and optionally the exfoliating graphite is homogeneously dispersed in the polyol component. Alternatively, all components can be introduced individually to the mixing zone where the polyisocyanate and polyol(s) are contacted. In such a process, the dispersion of the phosphorous-containing compound and optionally the exfoliating graphite in polyol may be added as a concentrate in the polyol by a separate line into the mixing zone. It is also possible to pre-react all or a portion of the polyol(s), in the absence of water, with the polyisocyanate to form a prepolymer. Alternatively, the phosphorous-containing compound is homogeneously dispersed in the isocyanate component.

In one embodiment, the semi-rigid foams produced according to the present invention are produced by a slab stock technology. It can be continuous slab stock production, but most preferably it is a discontinuous process. After the production of the polyurethane foam block, the foam is cut in sheets having different dimensions, depending on final application, typically ranging from 10 to 50 mm.

The semi-rigid foams produced according to the present invention are used in the domestic sector, for example providing sound absorption, as paneling elements and in the automobile industry, as structure-borne soundproofing materials and thermal insulation of walls and roofs.

The following examples are given to illustrate the invention and should not be interpreted as limiting it in anyway. Unless stated otherwise, all parts and percentages are given by weight.

### EXAMPLES

Comparative Examples A to D and 1 to 2, and Examples 3 to 4 comprise a formulated polyol blend reacted with a polymeric MDI made into a slab stock semi-rigid polyurethane foam. The polymeric MDI has an isocyanate content of about 32 % by weight. The polyol blend and polymeric MDI are mixed in a polyurethane dispense machine. This dispense machine is a standard machine that is available in the market for example from equipment suppliers like OMS, Henneke and Cannon. The dispense machine is capable of mixing the system at the given ratio. The ratio is controlled by the pump/motor size. This dispense temperature of the material is in the range of 75 to 95°F and preferred at 85°F (24 to 35°C, preferably 29°C) for both sides.

The following components are used for Comparative Examples A to D, and 1 to 2 and Examples 3 to 4, amounts are given as weight % based on the total weight of the isocyanate side or the polyol side in Table 1:
"Polyol-1" is a nominal 6000 Mw EO-capped triol with an OH number of 29 mg KOH/g available as SPECFLEX™ NC 138 Polyol from The Dow Chemical Company;
"Polyol-2" is a nominal 4800 Mw EO-capped trio with an OH number of 34 mg KOH/g available as VORANOL™ 4711 Polyol from The Dow Chemical Company;
"Polyol-3" is a nominal 700 Mw homopolymer, 6 functional sucrose/glycerine initiated polyether polyol with an OH number of 477 KOH/g available as VORANOL RN 482 Polyol from the Dow Chemical Company;
"Antioxidant" is a blend of antioxidants used as a scorch inhibitor for polyurethane foams;
"Silicone" is a blend of polysilicone surfactants used in rigid polyurethane foams;
" FR-1" is a synthetic isopropylated triaryl phosphate ester, which can be used in a wide variety of resins as flame retardant additive, available as REOFOS™ 50 from Great lakes solutions;
"FR-2" is an alkylphosphate oligomer flame retardant additive used in flexible polyurethane foam, available as FYROL™ PNX from ICL Industrial Products;
"FR-3" is triethyl phosphate a flame retardant additive available from Quimidroga;
"FR-4" is 2,2-bis(chloromethyl)trimethylene bis(bis(2-chloroethyl)phosphate) is a high molecular weight phosphate ester available as CEL TECH™ 60 from Cellular Technology Europe;
"Isocyanate" is a polymethylene polyphenylene polyisocyanate based on 35% of polymeric MDI, 65% of Monomeric MDI and is available as SPECFLEX™ NE 449 Isocyanate from The Dow Chemical Company.

The following test methods are used to characterize Comparative Examples A to D and 1 to 2 and Examples 3 to 4, in Table 2:
Applied density is determined according to DIN 53420/ISO 845;
Stiffness at 40% compression is determined according to DIN EN ISO 3386;
Tensile Strength is determined according to DIN EN ISO 1798;
Elongation at break is determined according to DIN EN ISO 1798;
Acoustic evaluation is sound coefficient absorption in a reverberation room
Alpha Cabin test determined according to DIN 52212/ISO 354 2003;

Flammability is determined at 20 and/or 13mm. The dimensions of the test specimens are at least (230 x 200) mm. The flame exposure test is divided into a short-term flame exposure of 15 seconds and a long-term flame exposure of 10 minutes. An extraction system for the flame test equipment may extract the exhaust gases produced but must not impair the burner flame or prevent the formation of flames on the specimen or contribute to the flame on the specimen increasing in size or spreading. Unless otherwise specified, during the surface flame exposure both sides of the specimen are flamed. A blazing, yellow flame with a flame height of 100 mm is set with the burner in the vertical position. No air is admitted into the burner tube.

### Horizontal tests

The clamped specimen is fixed horizontally into the mounting; the burner is positioned under the specimen in such a way that the flame strikes the specimen surface at the point where the diagonals intersect (center of the specimen surface). The distance between the top of the burner and the specimen surface is 90 mm.

### Vertical tests

The specimen is fixed vertically in the mounting and the burner is then placed in the vertical position under the edge of the specimen in such a way that the flame reaches the edge to be tested. The distance between the top of the burner nozzle and the bottom edge of the specimen is 30 mm.

### Short-term flame exposure:

After a flame exposure period of 15 seconds, the gas supply is shut off and the first specimen is evaluated according to the test report.

### Long-term flame exposure:

After a flame exposure period of 10 minutes, the gas supply is shut off and the second specimen is evaluated according to the test report.

### Evaluation - to pass a sample must meet the following criteria:

Self-extinction: After removing the ignition flame, the fire on the specimen must extinguish within 5 seconds. The size of any damaged area must not exceed 150 mm (vertical specimen arrangement: 150 mm length, horizontal specimen arrangement: 150 mm diameter).

Re-ignition: Specimens must not re-ignite when air is blown on them with a hair dryer. The size of the damaged area must not exceed 150 mm.

Dripping of material: Dripping of burning substance is not permitted. Dripping material must not ignite a cotton ball positioned below the specimen.

Odor is determined subjectively during the production of the foam as either acceptable (rated "pass") or unacceptable.

**Table 1**

| Comparative Example Example | A | B | C | D | 1 | 2 | 3 | 4 |
|---|---|---|---|---|---|---|---|---|
| Polyol side | | | | | | | | |
| Polyol-1 | 65 | 65 | 65 | 65 | 65 | - | - | - |
| Polyol-2 | 10 | 10 | 15 | 15 | 15 | 78.5 | 75.5 | 73.5 |
| Polyol-3 | 15 | 15 | 15 | 15 | 15 | 15 | 15 | 15 |
| Water | 10 | 10 | 10 | 10 | 10 | 10 | 10 | 10 |
| Antioxidant | 0.6 | 0.6 | 0.6 | 0.6 | 0.6 | 0.6 | 0.6 | 0.6 |
| Silicone | 0.9 | 0.9 | 0.9 | 0.9 | 0.9 | 0.9 | 0.9 | 0.9 |
| FR-1 | 10 | 20 | | | | | | |
| FR-2 | | | 5 | | | | | |
| FR-3 | | | | 5 | | | | |
| FR-4 | | | | | 5 | 5 | 8 | 10 |

| Catalyst | | | | | | | | |
|---|---|---|---|---|---|---|---|---|
| Polyethyleneglycol | 90 | 90 | 90 | 90 | 90 | 90 | 90 | 90 |
| Stannous 2-Ethylhexanoate | 10 | 10 | 10 | 10 | 10 | 10 | 10 | 10 |

| Isocyanate Side | | | | | | | | |
|---|---|---|---|---|---|---|---|---|
| Isocyanate | 100 | 100 | 100 | 100 | 100 | 100 | 100 | 100 |

**Table 2**

| Comparative Example Example | A | B | C | D | 1 | 2 | 3 | 4 |
|---|---|---|---|---|---|---|---|---|
| Applied density, Kg/m³ | 15 | 15 | Foam collapses | 15 | 15 | 15 | 15 | 15 |
| Stiffness at 40% Compression, Kpa | >18 | >18 | | >18 | >18 | >18 | >18 | >18 |
| Tensile Strength, Kpa | >25 | >25 | | >25 | >25 | >25 | >25 | >25 |
| Elongation at break, % | >15 | >15 | | >15 | >15 | >15 | >15 | >15 |
| Acoustic | Pass | pass | | Not tested | Pass | Pass | Pass | Pass |
| Flammability (sample thickness of 20 mm) | Pass | Pass | | Not tested | Pass | Pass | Pass | Pass |
| Flammability (sample thickness of 13 mm) | Fail | Fail | | Not tested | Fail | Fail | Pass | Pass |
| Odor | Pass | Pass | | Not acceptable | Pass | Pass | Pass | Pass |

## Claims

1. A method for producing a flame-retardant open-celled semi-rigid polyurethane foam having an overall density of 10 to 20 kg/m³ by reacting (a) a polyisocyanate and (b) a polyol having an average molecular weight of 100 to 10,000 and an average functionality of 2 to 8, in the presence of (c) 2,2-bis(chloromethyl)-trimethylene bis(bis(2-chloroethyl)phosphate, wherein the 2,2-bis(chloromethyl)-trimethylene bis(bis(2-chloroethyl)phosphate is added in an amount equal to or greater than 7 percent by weight of the final foam and equal to or less than 25 percent by weight of the final foam, (d) a blowing agent, and (e) one or more optional additional component with the proviso that there are no other phosphorous-containing flame retardant additives, other than (c), in the resulting flame-retardant open-celled semi-rigid polyurethane foam.

2. The method of claim 1 wherein the polyol is a polyether polyol.

3. The method of claim 1 wherein the polyol is a polyester polyol.

4. The method of any of the preceding claims wherein the blowing agent is water.

5. The method of claim 4 wherein the water is added in an amount of 5 to 25 parts by weight per 100 parts by weight of polyol.

6. The method of claim 1 wherein the blowing agent is a combination of water and a hydrocarbon having a boiling point of -10°C to +70°C.

7. The method of claim 1 wherein the blowing agent is a combination of water and halocarbon.

8. The method of Claim 1 wherein the polyisocyanate is polymethylene polyphenylene polyisocyanates or an isomer thereof.

9. The method of Claim 1 wherein the optional additional component includes an additional flame-retardant.

10. The method of Claim 9, wherein the optional additional auxiliary substance is exfoliating graphite,

11. A foam produced by the method of Claim 1.

## Patentansprüche

1. Ein Verfahren zum Herstellen eines flammhemmenden, offenzelligen, halbstarren Polyurethanschaumstoffs, der eine Gesamtdichte von 10 bis 20 kg/m³ aufweist, durch Zur-Reaktion-Bringen von (a) einem Polyisocyanat und (b) einem Polyol, das ein durchschnittliches Molekulargewicht von 100 bis 10 000 und eine durchschnittliche Funktionalität von 2 bis 8 aufweist, in Gegenwart von (c) 2,2-Bis(chlormethyl)-trimethylenbis(bis(2-chlorethyl)phosphat, wobei das 2,2-Bis(chlormethyl)-trimethylenbis(bis(2-chlorethyl)phosphat in einer Menge von gleich oder größer als 7 Gewichtsprozent des endgültigen Schaumstoffs und gleich oder weniger als 25 Gewichtsprozent des endgültigen Schaumstoffs hinzugefügt wird, (d) einem Treibmittel und (e) einer oder mehreren optionalen zusätzlichen Komponenten, mit der Maßgabe, dass es außer (c) in dem resultierenden flammhemmenden, offenzelligen, halbstarren Polyurethanschaumstoff keine weiteren phosphorhaltigen flammhemmenden Zusatzstoffe gibt.

2. Verfahren gemäß Anspruch 1, wobei das Polyol ein Polyetherpolyol ist.

3. Verfahren gemäß Anspruch 1, wobei das Polyol ein Polyesterpolyol ist.

4. Verfahren gemäß einem der vorhergehenden Ansprüche, wobei das Treibmittel Wasser ist.

5. Verfahren gemäß Anspruch 4, wobei das Wasser in einer Menge von 5 bis 25 Gewichtsteilen pro 100 Gewichtsteilen Polyol hinzugefügt wird.

6. Verfahren gemäß Anspruch 1, wobei das Treibmittel eine Kombination aus Wasser und einem Kohlenwasserstoff, der einen Siedepunkt von -10 °C bis +70 °C aufweist, ist.

7. Verfahren gemäß Anspruch 1, wobei das Treibmittel eine Kombination aus Wasser und Halogenkohlenwasserstoff ist.

8. Verfahren gemäß Anspruch 1, wobei das Polyisocyanat Polymethylen-Polyphenylen-Polyisocyanate oder ein Isomer davon sind.

9. Verfahren gemäß Anspruch 1, wobei die optionale zusätzliche Komponente einen zusätzlichen Flammhemmer umfasst.

10. Verfahren gemäß Anspruch 9, wobei die optionale zusätzliche Hilfssubstanz Blähgraphit ist.

11. Ein Schaum, der durch das Verfahren gemäß Anspruch 1 hergestellt wird.

## Revendications

1. Un procédé pour la production d'une mousse de polyuréthane semi-rigide à alvéoles ouvertes retardatrice de flamme ayant une masse volumique globale de 10 à 20 kg/m³ par réaction (a) d'un polyisocyanate et (b) d'un polyol ayant une masse moléculaire moyenne de 100 à 10 000 et une fonctionnalité moyenne de 2 à 8, en présence (c) de bis(bis(2-chloroéthyl)phosphate) de 2,2-bis(chlorométhyl)-triméthylène, dans lequel le bis(bis(2-chloroéthyl)phosphate) de 2,2-bis(chlorométhyl)-triméthylène est ajouté dans une quantité supérieure ou égale à 7 pour cent en poids de la mousse finale et inférieure ou égale à 25 pour cent en poids de la mousse finale, (d) d'un agent d'expansion, et (e) d'un ou de plusieurs constituants additionnels facultatifs à la condition qu'il n'y ait pas d'autres additifs retardateurs de flamme contenant du phosphore, autres que (c), dans la mousse de polyuréthane semi-rigide à alvéoles ouvertes retardatrice de flamme obtenue.

2. Le procédé de la revendication 1 dans lequel le polyol est un polyol de polyéther.

3. Le procédé de la revendication 1 dans lequel le polyol est un polyol de polyester.

4. Le procédé de n'importe lesquelles des revendications précédentes dans lequel l'agent d'expansion est l'eau.

5. Le procédé de la revendication 4 dans lequel l'eau est ajoutée dans une quantité de 5 à 25 parties en poids pour 100 parties en poids de polyol.

6. Le procédé de la revendication 1 dans lequel l'agent d'expansion est une combinaison d'eau et d'un hydrocarbure ayant un point d'ébullition de -10 °C à +70 °C.

7. Le procédé de la revendication 1 dans lequel l'agent d'expansion est une combinaison d'eau et d'un halocarbure.

8. Le procédé de la revendication 1 dans lequel le polyisocyanate est des polyisocyanates de polyméthylène-polyphénylène ou un isomère de ceux-ci.

9. Le procédé de la revendication 1 dans lequel le constituant additionnel facultatif inclut un retardateur de flamme additionnel.

10. Le procédé de la revendication 9, dans lequel la substance auxiliaire additionnelle facultative est le graphite exfolié.

11. Une mousse produite par le procédé de la revendication 1.
